Europäisches Patentamt

European Patent Office

Office européen des brevets

(11) Numéro de publication: **0 351 280**
**A1**

## (12) DEMANDE DE BREVET EUROPEEN

(21) Numéro de dépôt: 89401875.3

(22) Date de dépôt: 29.06.89

(51) Int. Cl.5: **B 60 J 7/057**
**E 05 F 15/14**

(30) Priorité: 12.07.88 FR 8809486

(43) Date de publication de la demande:
17.01.90 Bulletin 90/03

(84) Etats contractants désignés: **DE ES GB IT SE**

(71) Demandeur: **ROCKWELL-CIM**
**Tour Gan - Cédex 13**
**F-92082 Paris La Défense 2 (FR)**

(72) Inventeur: **Dauvergne, Jean**
**6, rue de Hilsz**
**F-95470 Fosses (FR)**

**Fournier, Gérard**
**Route d'Evrecy Sainte Honorine du Say**
**F-14210 Eurecy (FR)**

(74) Mandataire: **Martin, Jean-Paul et al**
**c/0 CABINET LAVOIX 2, Place d'Estienne d'Orves**
**F-75441 Paris Cedex 09 (FR)**

(54) **Ensemble motoréducteur à programmateur, destiné en particulier à la commande d'un toit ouvrant de véhicule automobile.**

(57) Cet ensemble motoréducteur comporte un moteur électrique (1), un réducteur de recopie de position avec programmateur de cycle; le réducteur comprend un train dont un pignon terminal porte une piste électrique tournante (30) associée à des balais fixes (31,32,33,34) d'un circuit de commande, et qui forme un étage de sélection de phase du cycle ; une seconde piste électrique tournante (40) est portée par un étage d'entrée du réducteur et coopère avec d'autres balais fixes (41, 42) pour former l'étage de validation de la phase choisie par la piste de sélection (30). Cet agencement rend silencieux le fonctionnnement de l'ensemble motoréducteur programmateur qui peut de plus être constitué de pièces robustes.

FIG. 4

## Description

### Ensemble motoréducteur à programmateur, destiné en particulier à la commande d'un toit ouvrant de véhicule automobile

La présente invention a pour objet un ensemble motoréducteur avec programmateur destiné à commander les déplacements d'un organe mécaniquement lié au réducteur suivant un cycle prédéterminé.

Un tel ensemble peut être utilisé par exemple pour commander le déplacement d'accessoires coulissants de véhicules automobiles, tels que des toits ouvrants.

Les motoréducteurs avec programmateurs comprennent en général un dispositif de recopie de position, le plus souvent constitué par un réducteur dont le dernier étage comporte une came actionnant des contacts électriques correspondant à des événements tels que : arrêt position fermée, arrêt fin de course, etc.

Les programmateurs connus présentent l'inconvénient d'être peu précis. En effet, le réducteur y introduit une erreur importante dûe notamment au jeu de denture. Or cette erreur dans la commande des événements a pour effet en particulier de mal positionner l'organe à commander. Si cet organe est un toit ouvrant de véhicule, il peut se produire que le panneau mobile s'arrête dans une position mal fermée.

Pour résoudre ce problème on a donc tenté de construire des réducteurs spéciaux du type à "croix de Malte" dont la particularité est de faire passer la came de commande à grande vitesse quand l'événement doit se produire, et de la maintenir à l'arrêt lorsqu'il ne se produit rien. Si ce dispositif permet en effet de provoquer les événements avec une précision meilleure, le réducteur en est bruyant et les pièces constitutives fragiles.

L'invention a donc pour but de proposer un ensemble motoréducteur avec programmateur dans lequel ces inconvénients sont éliminés.

Suivant l'invention, le réducteur de recopie de position comporte un étage de sélection de phase du cycle et un étage de validation d'un événement dans la phase sélectionnée, et un circuit électrique de commande est relié aux deux étages du réducteur et au moteur.

Ainsi la commande est scindée en deux éléments, l'un de sélection de phase du cycle, l'autre de validation de l'événement.

Suivant un mode de réalisation de l'invention, le réducteur comprend un train de réduction dont un pignon terminal porte une piste électrique tournante associée à des balais fixes du circuit précité, formant l'étage de sélection de phase du cycle, et dont une roue dentée d'entrée porte une piste électrique tournante coopérant avec d'autres balais fixes du circuit électrique, et constituant l'étage de validation, la piste de sélection étant entraînée à une vitesse de rotation lente par rapport à celle de la piste de validation.

Les deux pistes tournantes font office de cames coopérant avec des balais frotteurs, ce qui assure un fonctionnement très silencieux à l'ensemble motoréducteur selon l'invention, tout en permettant sa construction avec des pièces robustes.

Suivant d'autres caractéristiques de l'invention:
- la piste de sélection s'étend coaxialement à son pignon de support, le rapport de réduction du train réducteur étant choisi de manière qu'un cycle complet de l'organe commandé par le réducteur soit reproduit sur moins d'un tour du pignon et de la piste de sélection.
- dans la piste de sélection est ménagé un nombre d'échancrures égal à celui des différentes positions d'arrêt possibles de l'organe commandé, et chacune de ces échancrures coopère avec l'un au moins des balais d'alimentation, de façon à interrompre la continuité électrique.
- la piste de validation s'étend coaxialement à la roue dentée d'entrée et présente une zone isolée périphérique dont la largeur angulaire est égale à environ le double d'un angle d'arrêt du moteur, sur lequel ce dernier continue à tourner sous l'effet de l'inertie avant arrêt complet lorsqu'il est freiné en court-circuit, et l'un des balais fixes précités coopère avec cette zone périphérique.

D'autres particularités et avantages de l'invention apparaîtront au cours de la description qui va suivre, faite en référence aux dessins annexés qui en illustrent un mode de réalisation à titre d'exemple non limitatif.

La figure 1 est une vue en coupe longitudinale, suivant 1-1 de la Fig.2, d'un ensemble motoréducteur avec programmateur conforme à l'invention, logé dans le boîtier du motoréducteur.

La figure 2 est une vue en coupe transversale suivant 2-2 de la Fig.1.

La figure 3 est un schéma montrant les différentes positions possibles d'un toit ouvrant de véhicule.

La figure 4 est un schéma d'une forme de réalisation du circuit électrique de commande intégré à l'ensemble motoréducteur des Fig.1 et 2, ce circuit étant plus particulièrement destiné à la commande du toit ouvrant de la Fig.3.

Les figures 5 à 12 sont des schémas analogues à la Fig.4 illustrant les différentes séquences d'un cycle d'utilisation de l'organe commandé par l'ensemble motoréducteur.

La figure 13 est une vue de détail illustrant une variante d'exécution.

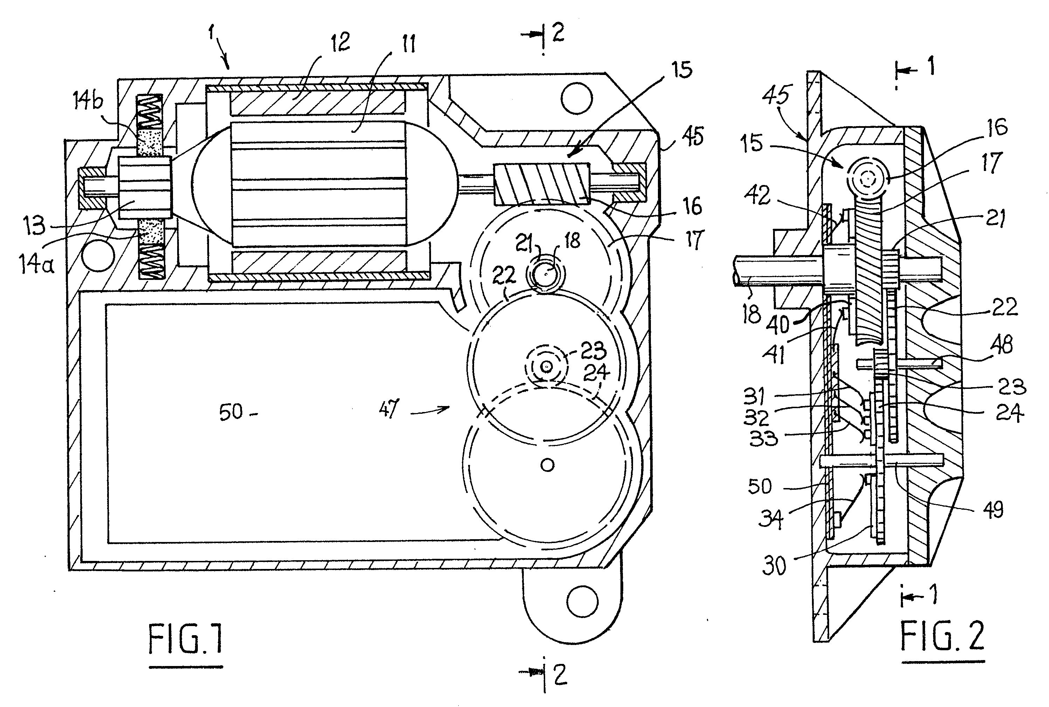

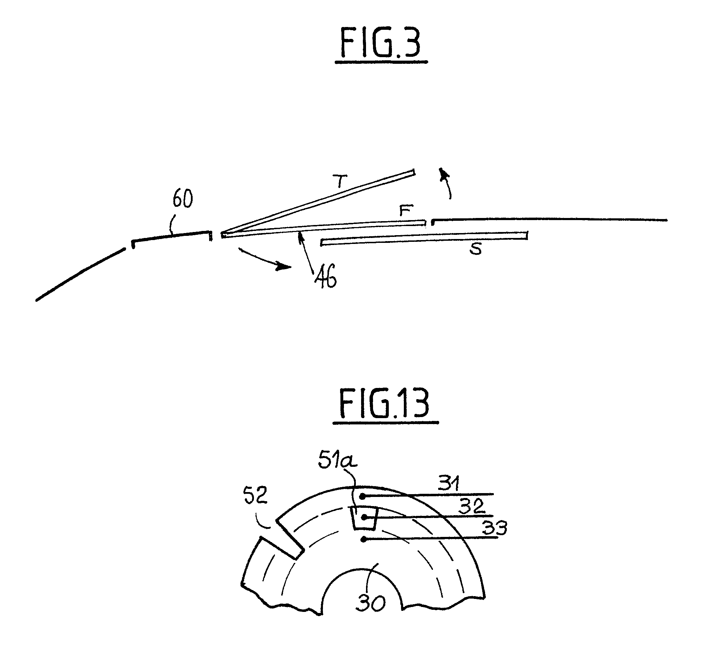

L'ensemble motoréducteur à programmateur représenté aux Fig.1 et 2 comporte un motoréducteur composé d'un moteur électrique 1 et d'un réducteur de puissance 15 à vis tangente 16 engrenant sur une roue dentée 17 solidaire en rotation d'un arbre 18 traversant un boîtier 45 contenant l'ensemble motoréducteur et programmateur. L'arbre 18 est mécaniquement lié par des moyens non représentés et connus en soi, à un organe qui doit se déplacer suivant un cycle prédéterminé, par exemple un toit ouvrant 46 d'un véhicule automobile 60 (Fig.3). Le moteur 1 comporte, de manière connue, un induit 11, des aimants 12, un collecteur 13, et des balais 14a, 14b, associés au collecteur 13.

L'ensemble motoréducteur comprend un réducteur de commande 47 qui recopie la position de l'organe commandé. Ce réducteur de commande 47 comprend un train de réduction composé d'un premier petit pignon 21 solidaire de l'arbre 18, d'un second grand pignon 22 porté par un axe 48 tourillonnant dans le boîtier 45 et solidaire d'un petit pignon 23, et d'un quatrième grand pignon terminal 24 monté sur un axe 49 tourillonnant dans le boîtier 45. Les engrènements successifs se font entre les pignons 21 et 22, puis entre les pignons 23 et 24.

Le pignon terminal 24 porte une piste électrique tournante 30 calée sur celui-ci et associée à quatre balais frotteurs 31, 32, 33, 34 du circuit électrique de commande. La piste tournante 30 et ses balais 31-34 constituent un étage de sélection de phase du cycle placé au dernier étage de réduction du train 47. La piste 30 et son pignon 24 de support tournant à vitesse lente, la piste 30 recopie la position du mécanisme entraîné, sur un tour au plus et de préférence moins d'un tour du pignon 24.

Le réducteur de recopie 47 est également muni d'une seconde piste électrique tournante 40 portée par la roue dentée 17 et qui coopère avec deux balais frotteurs 41, 42 du circuit électrique. La piste 40 et ses balais 41,42 constituent un étage de validation de l'événement dans la phase du cycle sélectionnée par la piste 30. La piste 40 tourne à la vitesse de l'arbre 18, donc beaucoup plus rapidement que la piste de sélection 30.

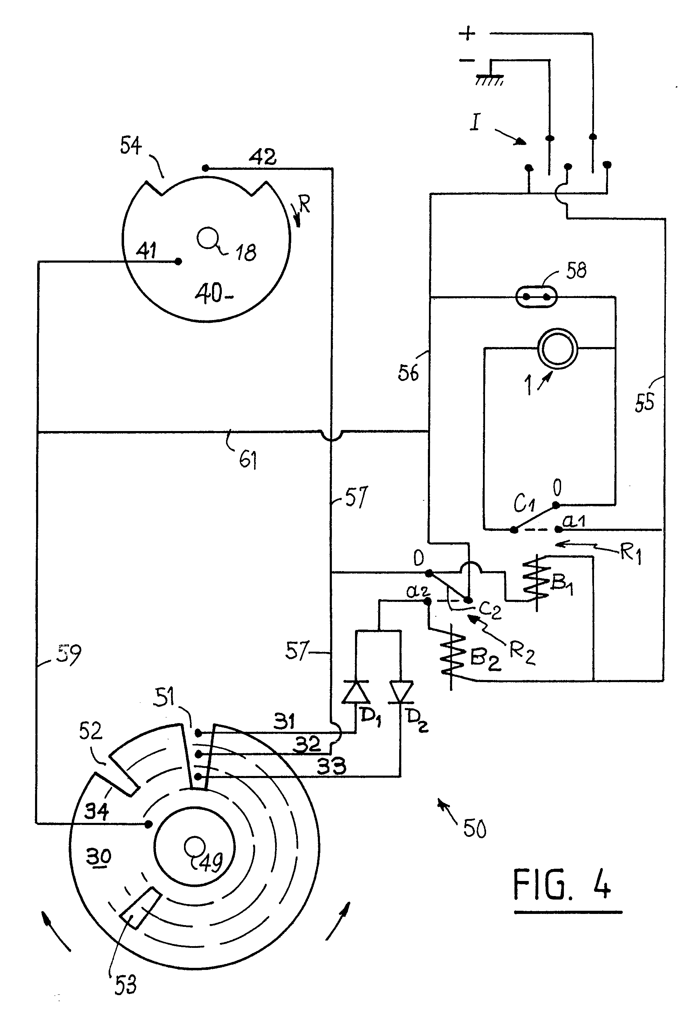

Le circuit électrique de commande comprend un circuit 50, de préférence imprimé, fixé à la paroi intérieure du boîtier 45, portant la partie fixe des balais frotteurs 31-34 et 41,42 et qui comporte les composants illustrés aux Fig.4 à 12.

La piste de sélection 30 s'étend coaxialement au pignon 24, le rapport de réduction du train réducteur 47 étant choisi de manière qu'un cycle complet de l'organe commandé par celui-ci soit reproduit sur moins d'un tour du pignon 24 et de la piste 30. Dans cette dernière est ménagé un nombre d'échancrures égal à celui des différentes positions d'arrêt possibles de l'organe commandé, et chaque échancrure coopère avec au moins l'un des balais correspondants.

Dans l'exemple décrit, la piste 30 comporte trois échancrures radiales 51,52,53 s'étendant sur des distances différentes et correspondant aux trois positions d'arrêt possibles du toit ouvrant 46. L'échancrure 51 s'étend depuis la périphérie de la piste 30 jusqu'à un point suffisant pour que les extrémités des trois balais frotteurs 31,32,33, décalés radialement dans cet ordre depuis la périphérie de la piste 30 vers son centre, puissent être reçues simultanément dans l'échancrure 51, interrompant alors la continuité électrique sur les connexions correspondantes.

L'échancrure 52 s'étend depuis la périphérie de la piste 30 jusqu'à une distance radiale inférieure à celle de l'échancrure 51, de telle sorte qu'elle ne puisse recevoir que les extrémités des balais frotteurs extérieurs 31 et 32. Enfin la troisième échancrure 53 est formée à l'intérieur de la piste 30 sur une distance radiale telle qu'elle puisse recevoir les extrémités des balais frotteurs 32 et 33 seulement, à l'exclusion du balai extérieur 31. Le quatrième balai frotteur 34 a son extrémité en contact avec une zone annulaire de la piste 30 intérieure aux échancrures 51-53. Ce balai 34 est relié au balai frotteur 41 de la piste de validation 40, l'extrémité du balai 41 étant en contact avec la piste 40 au voisinage de la zone centrale de celle-ci.

Les trois échancrures 51,52,53, se recoupent donc partiellement dans la direction radiale et sont écartées angulairement l'une de l'autre. Lorsque les trois balais frotteurs 31,32,33 sont dans l'échancrure 51, cette position angulaire de la piste de sélection 30 correspond à la position fermée F du toit 46 (Fig.3), tandis que lorsque les balais frotteurs 31,32 sont dans l'échancrure 52, cette position angulaire correspond à la position ouverte T du toit après basculement ; la position des balais 32,33 dans l'échancrure 53 correspond enfin à la position ouverte S du toit 46 après translation.

La piste 40 de validation s'étend coaxialement à la roue dentée 17 et au pignon 21, et présente une zone isolée délimitée par une échancrure périphérique 54 dont la largeur angulaire est égale à environ le double de l'angle d'arrêt du moteur 1, c'est-à-dire l'angle sur lequel ce dernier continue à tourner avant arrêt complet, lorsqu'il est freiné en court-circuit. En pratique, cet angle d'arrêt est d'environ 25°, de sorte que la largeur angulaire de l'échancrure 54 est d'environ 50°. S'agissant de la piste de validation 40 d'un ordre d'arrêt de l'organe comandé, l'échancrure 54 permet donc d'anticiper l'arrêt effectif dans les deux sens de marche.

Le circuit électrique de commande comprend (Fig.4) un relais de puissance R1 dont le contact mobile C1 est relié, en position de repos, référence 0, aux bornes du moteur 1, un relais de mémoire R2 dont la bobine B2 est reliée à la bobine B1 du relais R1 ainsi qu'aux deux balais frotteurs 31,33 de la piste 30 par l'intermédiaire de deux diodes D1,D2 placées tête-bêche.

Le circuit comprend également un interrupteur bipolaire inverseur I relié aux relais R1 et R2. Plus précisément, le plot central de l'interrupteur I est relié par une connexion 55 aux bobines B1 et B2 ainsi qu'à un plot a1 correspondant à la position collée du contact mobile C1. Les deux autres bornes de l'inverseur I sont reliées par une connexion 56 au contact mobile C2 du relais mémoire R2. Dans sa position de repos référencée 0 (Fig.4), le contact C2 est relié à une connexion 57 de liaison des balais frotteurs 32 et 42 respectivement associés aux pistes 30 et 40. Le balai 42 est en contact avec la piste 40 par sa zone extérieure interrompue par l'échancrure 54 et n'est donc plus conducteur lorsqu'il se trouve dans cette dernière. Quant au balai 32, placé entre le balai extérieur 31 et le balai intérieur 33, il traverse successivement les trois échancrures 51,52,53 sur moins d'un tour de la piste 30.

Le moteur 1 est relié à la connexion 56 et donc à l'interrupteur I par un disjoncteur thermique 58 de protection. Les balais 41 et 34 sont reliés par une connexion 59 elle-même reliée à la connexion 56 par une liaison 61.

Le fonctionnement de l'ensemble motoréducteur programmateur qui vient d'être décrit, appliqué à la commande du toit ouvrant 46, est le suivant.

Partant de la position complètement ouverte après translation S, si l'arbre 18 tourne dans le sens horaire R (Fig.4), le toit 46 se rapproche de la position fermée F. Si à partir de cette dernière, l'arbre 18 tourne dans le même sens horaire R, le toit 46 bascule dans le sens qui l'amène vers la position d'ouverture complète T. Les déplacements inverses ont lieu lorsque l'arbre 18 tourne dans le sens anti-horaire AR.

On conçoit donc que la position F correspond à une position angulaire intermédiaire de l'arbre 18. En pratique, le trajet de translation complet de F à S ou inversement peut correspondre à environ 15 tours de l'arbre 18, tandis que le trajet de F à T pourra correspondre à 3 tours. La position centrale du toit 46 doit être précise, afin d'éviter que le toit ne se trouve mal fermé. En pratique, on doit tenir compte de l'angle d'arrêt du moteur 1 dû à son inertie, ce qui est la justification de l'échancrure 54 comme expliqué ci-dessus.

La Fig.4 représente l'état du circuit programmateur en position d'arrêt au centre, c'est-à-dire lorsque le panneau du toit 46 occupe la position fermée F. L'interrupteur bipolaire I est ouvert et le moteur 1 arrêté en court-circuit par le relais R1. Les contacts mobiles C1,C2, sont dans leurs positions de repos repérées 0. Dans cette position le contact C1 est relié au moteur 1 tandis que le contact C2 est relié aux balais 32 et 42 via la connexion 57. Le balai 42 est au milieu de l'échancrure 54 tandis que les balais 31, 32, 33 sont dans l'échancrure 51.

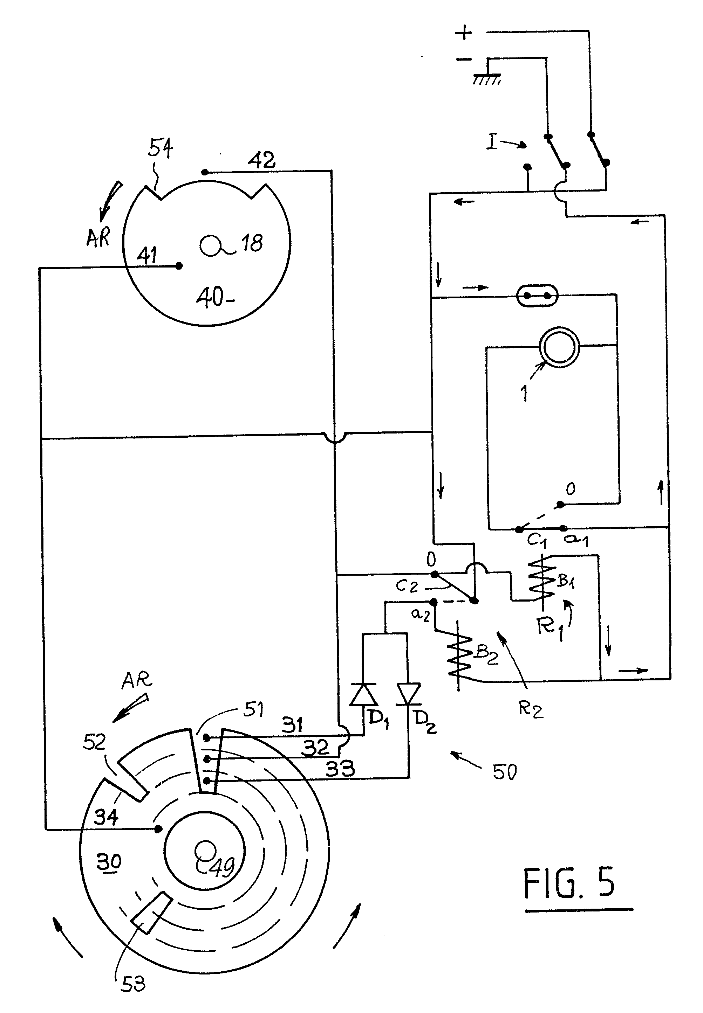

Lorsque l'utilisateur désire ouvrir le toit 46, par exemple vers la position S, c'est-à-dire dans le sens anti-horaire AR de rotation de l'arbre 18, il bascule l'interrupteur bipolaire I (Fig.5) de manière à connecter les pôles + et - de la batterie sur les bornes correspondantes du circuit 50.

Le courant circule alors dans le sens indiqué par les flèches et passe dans la bobine B1 du relais de puissance R1 via le contact C2 du relais mémoire R2. Le contact C1 du relais R1 bascule de sa position 0 à sa position a1, de sorte que le moteur 1 est alimenté via le disjoncteur thermique 58. Le moteur 1 tourne, entraînant l'arbre 18, le train réducteur 47 et les pistes tournantes 30 et 40.

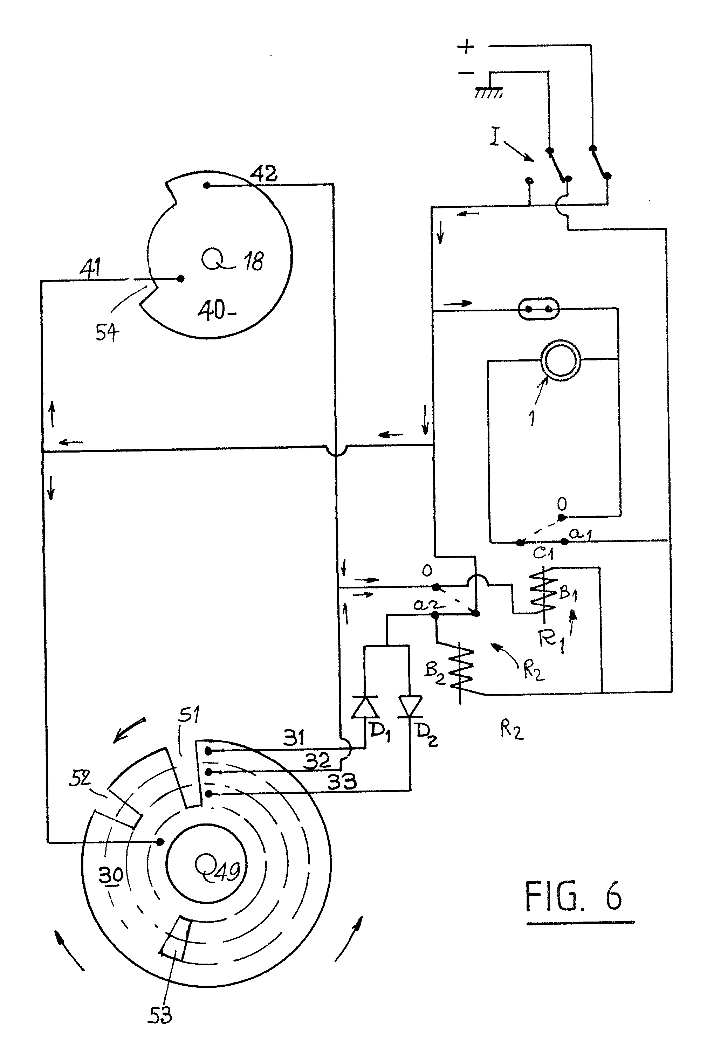

Après quelques degrés de rotation de la piste 30 dans le sens anti-horaire AR, celle-ci établit le contact électrique avec les balais 31,32,33. De son côté, la piste 40 qui tourne beaucoup plus vite que la piste 30, établit le contact entre les balais 34 et 42 (Fig.6). Ceci a pour résultat de faire passer du courant dans la bobine B2 du relais mémoire R2 via la diode D1 et le balai 31. Le contact C2 bascule alors pour venir dans sa position active a2 de liaison avec les balais 31,33. La bobine B1 du relais R1 se trouve alors alimentée via le balai 32 et la connexion 57, et le contact C1 est maintenu basculé pour alimenter le moteur 1.

On notera que le relais R2 est alors maintenu en auto-alimentation, d'où son appellation de "relais mémoire". Il ne pourra revenir à son état de repos qu'après coupure totale du courant.

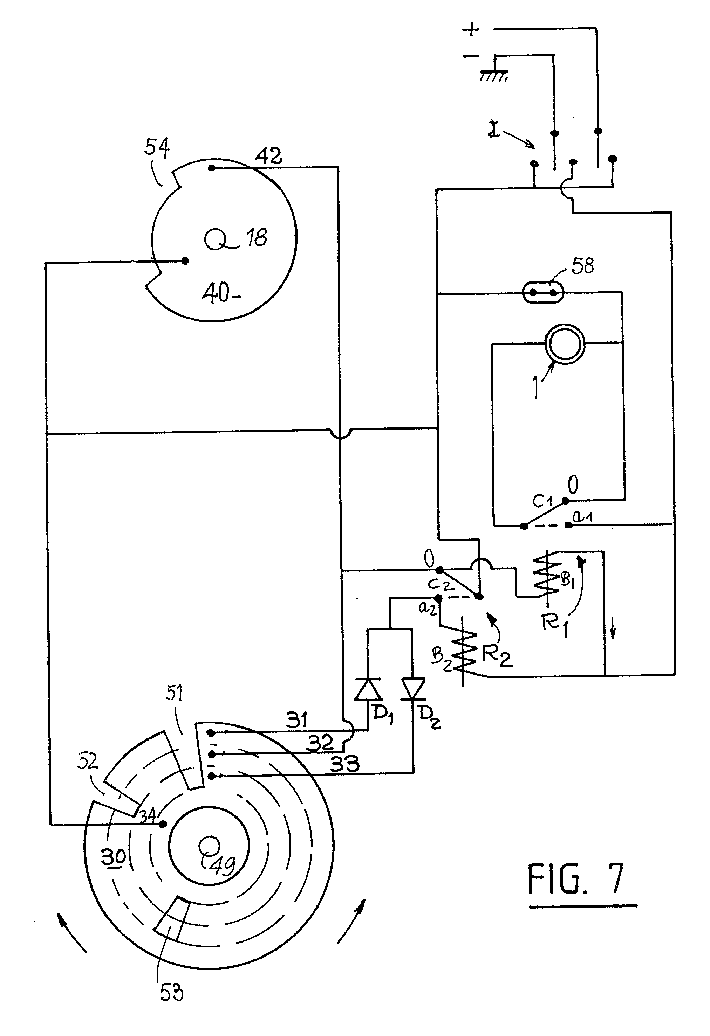

Si l'utilisateur arrête la manoeuvre à ce stade du fonctionnement, il ramène l'interrupteur bipolaire I dans sa position de repos (Fig.7). Le relais de puissance R1 n'est plus alimenté, son contact C1 revient à sa position 0 et le moteur 1 se trouve mis en court-circuit, ce qui lui confère un freinage efficace. Le relais R2 retourne également à sa position de repos, son contact C2 basculant sur sa position 0 de liaison avec la connexion 57 et le balai 32.

Si maintenant à partir de l'état de la Fig.7, l'utilisateur manoeuvre le toit ouvrant 46 dans l'un ou l'autre sens, par l'interrupteur bipolaire I, le relais R2 se trouve alimenté :
- soit par le balai 31 et la diode D1,
- soit par le balai 33 et la diode D2,
suivant le sens du courant (polarité de l'interrupteur I). Le relais R1 est alors alimenté par le contact C2 du relais mémoire R2 qui a basculé en position a2, et le moteur 1 est mis en fonctionnement dans le sens correspondant.

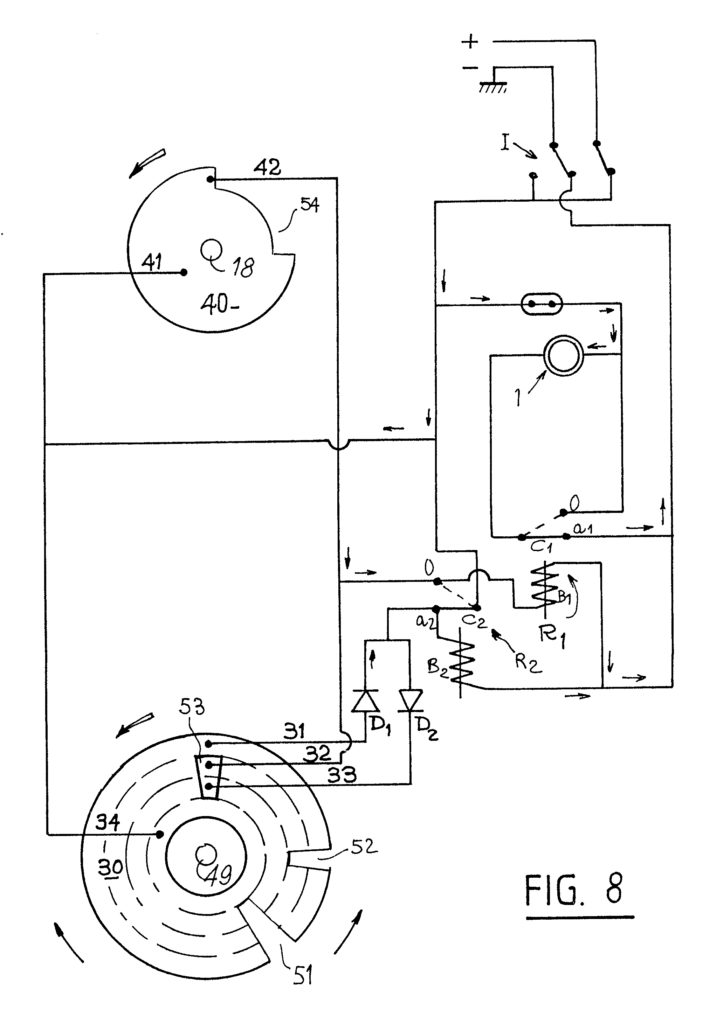

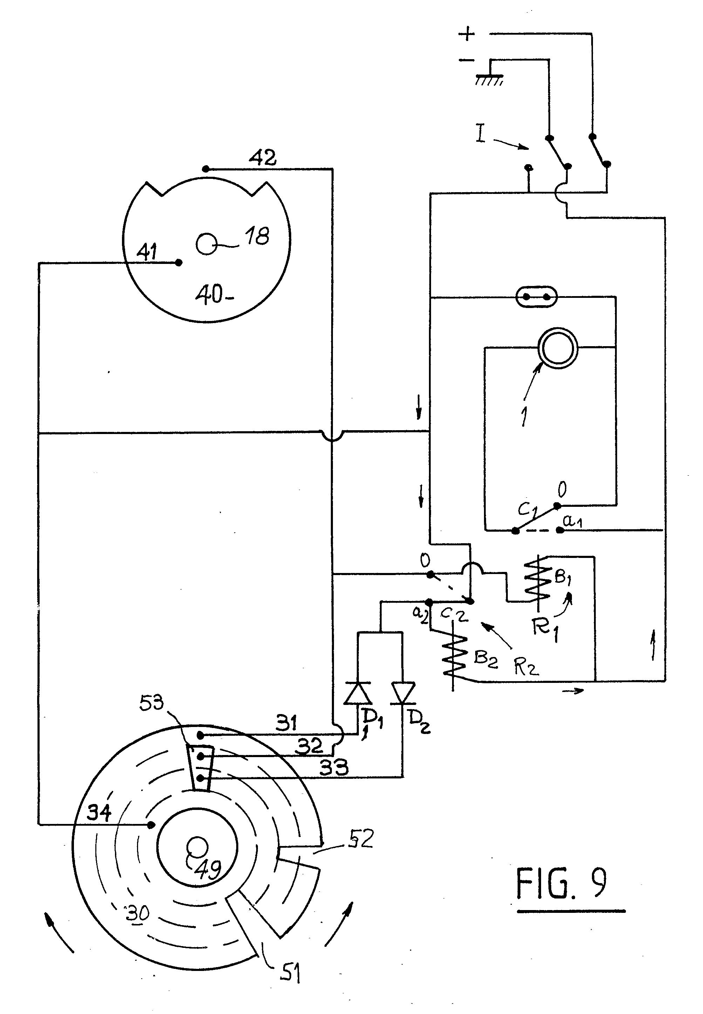

Supposons maintenant que le moteur 1 soit mis de nouveau en marche dans le sens anti-horaire, et que le panneau de toit ouvrant 46 arrive à la fin de l'ouverture coulissante S. La piste tournante 30 met les balais 32 et 33 dans une position isolée du balai 34, mais le relais R2 est toujours alimenté via le balai R1 et la diode D1. Pendant ce temps la bobine B1 du relais R1 est toujours alimentée, non plus par le balai 32, mais par le balai 42 maintenu en circuit par la piste 40 (Fig.8). Dès que le balai 42 se trouvera dans la zone isolée correspondant à l'échancrure 54, la bobine B1 du relais de puissance R1 ne sera plus alimentée, et le moteur 1 sera mis en court-circuit. Du fait de son inertie, le moteur tournera encore de manière à amener la piste 40 dans sa position de la Fig.9.

Il convient de noter les éléments suivants :
- Tant que dure la manoeuvre correspondant à l'état de la Fig.6, la piste 40 est court-circuitée par le balai 32. En effet, la piste 40 qui tourne à grande vitesse, effectue 15 tours environ quand la piste de recopie de position 30 n'effectue qu'une fraction de tour. Le passage de la zone isolante 54 de la piste 40 est donc sans effet, sauf dans la phase d'arrêt (Fig.8 et 9).
- En arrêt après ouverture coulissante S, si le contact de l'interrupteur I est maintenu (Fig.9), le relais mémoire R2 est maintenu, interdisant toute alimentation du relais R1. Il en est de même si, après mise au repos de l'interrupteur I, celui-ci est remis en position d'ouverture (alimentation de la bobine B2 via le balai 31 et la diode D1).

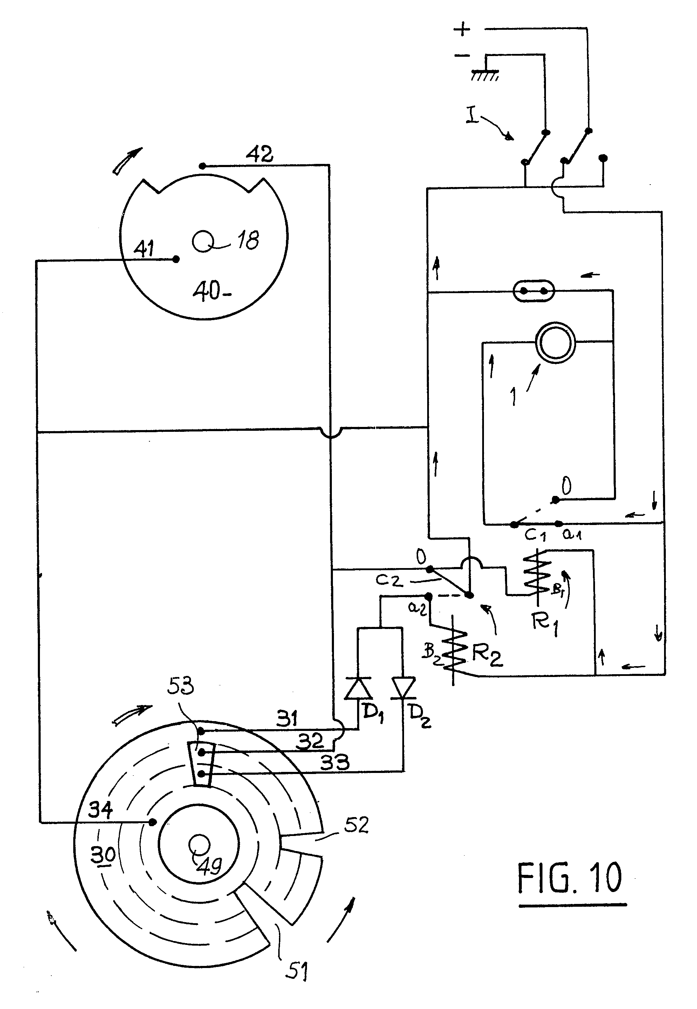

Si maintenant l'interrupteur I est manoeuvré dans le sens opposé (sens horaire), l'alimentation du relais R2 n'est plus possible en raison de la diode D1. Le relais R1 a sa bobine B1 alimentée par le contact C2 du relais R2, et le moteur 1 est alimenté en sens inverse (Fig.10).

Dès que la piste 30 a tourné de quelques degrés, le relais R2 se trouve alimenté par la piste 30 via le balai 33 et la diode D2, tandis que le relais R1 se trouve alimenté par le balai 32. La situation est donc identique à celle de la Fig.6, mais c'est la diode D2 qui fonctionne au lieu de la diode D1.

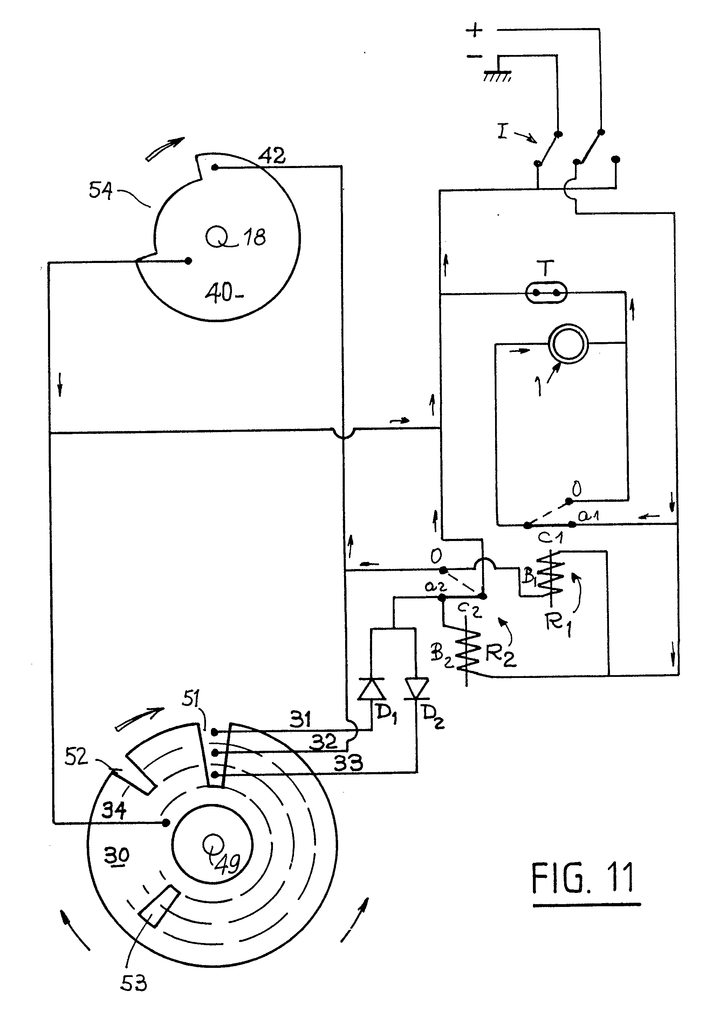

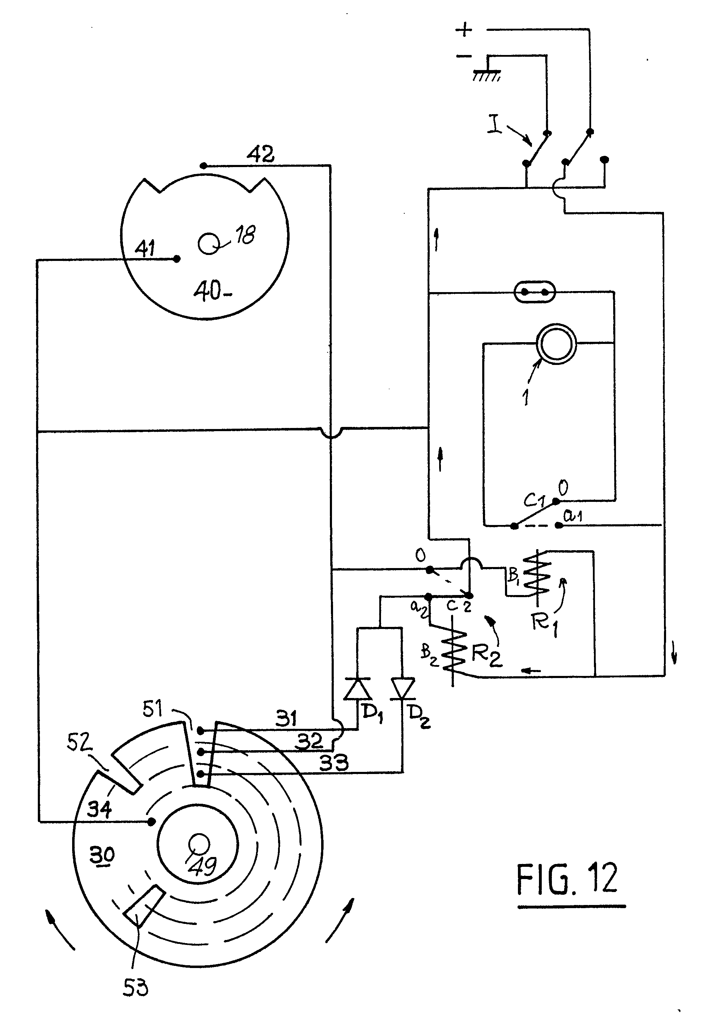

Lorsque le panneau ouvrant 46 arrive au voisinage de la position centrale fermée F (Fig.11) la piste tournante 30 interrompt l'alimentation des balais 31,32,33. Le relais R2 étant maintenu en auto-alimentation, la bobine B1 du relais R1 est alimentée via la piste 40 et le balai 42. Quand ce dernier atteint la zone isolée (échancrure 54 de la piste 40), le contact C1 du relais R1 retombe, provoquant la mise en court-circuit du moteur 1. Celui-ci continue de tourner sous son inertie, et s'arrète après quelques degrés (25) de rotation de l'arbre 18 (Fig.12).

Le fonctionnement est le même dans le sens du basculement vers la position ouverte T.

On notera que la position d'arrêt du toit ouvrant 46 en position centrale F correspond au milieu de la zone isolée constituée par l'échancrure 54.

Il résulte de la description ci-dessus que les connexions du circuit de commande sont réalisées de telle sorte que le relais mémoire R2 soit auto-alimenté après quelques degrés de rotation de la piste de sélection 30 consécutivement à un actionnement de l'interrupteur I. Ceci autorise le démarrage du moteur 1 et met en service l'alimentation du relais de puissance R1 par les pistes tournantes 30 et 40.

Par ailleurs, le circuit de commande est réalisé de façon que la piste de sélection 30 permette d'alimenter le relais mémoire R2 par une seule des deux diodes D1,D2 lorsqu'elle se trouve dans l'une des deux positions extrêmes (S ou T) du cycle et inversement. Par ailleurs, les connexions du circuit sont également réalisées de façon que la piste de validation 40 soit court-circuitée par la piste de sélection 30 en dehors des zones d'arrêt. Enfin, en variante, la piste de validation 40 peut être mise en service dans les zones d'arrêt.

La piste de sélection 30 reproduit sur moins d'un tour le trajet complet de l'organe à commander, permettant de présélectionner les zones d'arrêt.

On notera enfin qu'en position centrale du toit ouvrant 46, les diodes D1, D2 ne sont pas connectées (les balais 31-33 étant dans l'échancrure 51), ce qui autorise un démarrage du moteur 1 dans les deux sens, de basculement ou de translation du toit.

L'invention peut comporter notamment les variantes d'exécution suivantes :
- A la place de l'interruption du circuit des diodes D1, D2 constituée par l'entaille 51, le circuit peut présenter une interruption formée par une fenêtre centrale 51a (Fig.13) au niveau du balai 32, le fonctionnement étant le même. Plus généralement, chaque échancrure (51, 52, 53) ou fenêtre (51a) coopère avec l'un au moins des balais, de façon à interrompre la continuité électrique.
- Les balais tournent avec les pignons 24 et 17, les pistes étant fixes. Ceci peut être avantageux car elles peuvent être exécutées sur le circuit imprimé 50 lui-même.
- Le système proposé fonctionne "à manque de courant" dans les pistes 30 et 40, ce qui est bon pour la fiabilité. Toutefois, on peut réaliser l'inverse, c'est-à-dire que les ordres d'arrêt correspondent à deux zones électriquement passantes des pistes 30 et 40. Le circuit 50 serait alors configuré différemment. Ainsi, au lieu d'utiliser un circuit dont les relais sont excités pendant la phase de fonctionnement du moteur, et dont les circuits des bobines sont interrompus dans les zones d'arrêt, on peut réaliser un circuit dans lequel les contacts des relais sont en position de repos (relais non alimentés) pendant les périodes de fonctionnement, et en position de travail dans les zones d'arrêt. Les pistes de sélection et de validation sont alors réalisées de manière à établir une continuité électrique dans les zones d'arrêt, et à interrompre cette continuité dans les zones de travail.
- On peut aussi imaginer une ou plusieurs zones d'arrêt intermédiaires, qui nécessiteraient pour redémarrer le retour temporaire de l'interrupteur I au neutre. Ceci peut être réalisé dans un but, soit de sécurité (au retour en fermeture coulissante par exemple), soit de confort (ouvertures correspondant à un entre-baillement).

L'invention est applicable à la commande de tous les ouvrants coulissants, notamment vitre de véhicule.

## Revendications

1. Ensemble motoréducteur, comportant un moteur électrique (1), un réducteur de recopie de position (47) et un programmateur de cycle d'un organe (46) mécaniquement lié au réducteur, caractérisé en ce que le réducteur de recopie de position (47) comporte un étage (30) de sélection de phase du cycle et un étage (40) de validation d'un événement dans la phase sélectionnée, et un circuit électrique de commande (I,R1,R2,...) est relié aux deux étages (30,40) du réducteur et au moteur.

2. Ensemble selon la revendication 1, caractérisé en ce que le réducteur comprend un train de réduction (47) dont un pignon terminal (24) porte une piste électrique tournante (30) associée à des balais fixes (31,32,33,34) du circuit précité, formant l'étage de sélection de phase du cycle, et dont une roue dentée d'entrée (17) porte une piste électrique tournante (40) coopérant avec d'autres balais fixes (41,42) du circuit électrique, et constituant l'étage de validation, la piste de sélection (30) étant entraînée à une vitesse de rotation lente par rapport à celle de la piste de validation (40).

3. Ensemble selon la revendication 2, caractérisé en ce que la piste de sélection (30) s'étend coaxialement à son pignon de support (24), le rapport de réduction du train réducteur (47) étant choisi de manière qu'un cycle complet de l'organe (46) commandé par le réducteur soit reproduit sur moins d'un tour du pignon (24) et de la piste de sélection (30).

4. Ensemble selon la revendication 3, caractérisé en ce que dans la piste de sélection (30) est ménagé un nombre d'échancrures (51,52,53) égal à celui des différentes positions d'arrêt possibles de l'orga ne commandé, et chacune de ces échancrures coopère avec l'un au moins des balais d'alimentation (31,32,33) de façon à interrompre la continuité électrique.

5. Ensemble selon l'une des revendications 2 à 4, caractérisé en ce que la piste de validation (40) s'étend coaxialement à la roue dentée (17) d'entrée et présente une zone isolée périphérique (54) dont la largeur angulaire est égale à environ le double d'un angle d'arrêt du moteur (1), sur lequel ce dernier continue à tourner sous l'effet de l'inertie avant arrêt complet lorsqu'il est freiné en court-circuit, et l'un des balais fixes (41,42) précités coopère avec cette zone périphérique (54).

6. Ensemble selon l'une des revendications 2 à 5, caractérisé en ce que le circuit électrique de commande comprend un relais de puissance (R1) dont le contact mobile (1) est relié en position repos aux bornes du moteur (1), un relais de mémoire (R2) dont la bobine (B2) est reliée au relais de puissance (R1) ainsi qu'à certains (31,33) des balais frotteurs associés à la piste de sélection (30), un interrupteur bipolaire inverseur (I) relié aux relais, et des conducteurs de liaison entre les balais frotteurs (34,41,42) des pistes de sélection (30) et de validation (40) autres ceux (31,33) connectés au relais de mémoire (R2).

7. Ensemble selon la revendication 6, caractérisé en ce que des diodes (D1,D2) disposées tête-bêche sont interposées entre la bobine du relais mémoire (R2) et des balais frotteurs (31,33) de la piste de sélection (30).

8. Ensemble selon l'une des revendications 6 et 7, caractérisé en ce que les échancrures (51,52,53) de la piste de sélection (30) et les connexions du circuit de commande sont réalisées de telle sorte que le relais mémoire (R2) soit auto-alimenté après quelques degrés de rotation de la piste de sélection (30) consécutivement à un actionnement de l'interrupteur (I), afin d'autoriser le démarrage du moteur (1) et de mettre en service l'alimentation du relais de puissance (R1) par les pistes tournantes (30,40).

9. Ensemble selon la revendication 7, caractérisé en ce que le circuit de commande est réalisé de façon que la piste de sélection (30) permette d'alimenter le relais mémoire (R2) par une seule des deux diodes (D1,D2) lorsqu'elle se trouve dans l'une des deux positions extrêmes du cycle et inversement.

10. Ensemble selon l'une des revendications 6 à 9, caractérisé en ce que les connexions de circuit de commande sont réalisées de façon que la piste de validation (40) soit court-circuitée par la piste de sélection (30) en-dehors des zones d'arrêt.

11. Ensemble selon la revendication 1, caractérisé en ce que le réducteur cmprend un train de réduction dont un pignon terminal (24) porte des balais associés à une piste électrique fixe, ménagée dans un circuit imprimé (50), formant l'étage de sélection de la phase du cycle, et dont une roue dentée d'entrée (17) porte des balais associés à une piste électrique fixe, ménagée dans le circuit imprimé (50) et constituant l'étage de validation.

12. Ensemble selon l'une des revendications 3 et 11, caractérisé en ce que les pistes de sélection et de validation comportent des zones électriquement passantes auxquelles correspondent des ordres d'arrêt de l'organe commandé, le reste de ces pistes étant électriquement isolé.

13. Utilisation d'un ensemble motoréducteur avec programmateur de cycle selon l'une des revendications 1 à 12 pour la commande d'un toit ouvrant (46) de véhicule automobile, pouvant prendre une position de fermeture complète (F), une position d'ouverture complète (S) après translation horizontale, et une position d'ouverture complète après basculement (T), la position de fermeture complète correspondant au centre du cycle du programmateur.

14. Utilisation d'un ensemble motoréducteur selon les revendications 7 et 13, caractérisé en ce que, en position centrale du toit ouvrant (46), les diodes (D1,D2) sont connectées afin d'autoriser un démarrage du moteur (1) dans les deux sens, de basculement ou de translation du toit.

15. Utilisation d'un ensemble selon la revendication 14, caractérisé en ce que la piste tournante de sélection (30) comporte trois échancrures radiales (51, 52, 53), dont la première (51) correspond à l'arrêt du toit en position centrale lorsque les balais frotteurs (31-33) sont dans cette échancrure, et les deux autres échancrures (52, 53), qui recoupent chacune partiellement la première échancrure dans la direction radiale et sont écartées angulairement de celle-ci, correspondent respectivement aux arrêts du toit (46) en position ouverte après basculement (T) et après translation (S), les balais frotteurs (31-33) étant décalés radialement l'un par rapport à l'autre.

16. Utilisation d'un ensemble motoréducteur selon l'une des revendications 7 à 12 à la commande d'un ouvrant coulissant (46), caractérisée en ce que le circuit d'alimentation des diodes (D1,D2) présente une interruption, constituée soit par une entaille radiale (51) dans la piste de sélection (30) dans laquelle peuvent venir se placer les extrémités de balais (31,33) reliés aux diodes (D1,D2) et d'un balai central (32), soit par une fenêtre centrale (51a) agencée au niveau de l'extrémité d'un balai central (32) interposé entre deux balais (31,33) reliés aux diodes.

17. Ensemble selon la revendication 3, caractérisé en ce que les pistes de sélection et de validation sont réalisées de manière à établir une continuité électrique dans les zones d'arrêt et à interrompre cette continuité dans les zones de travail.

FIG. 2

FIG. 1

## FIG.3

60

T

F

S

46

## FIG.13

51a

52

31

32

33

30

FIG. 4

FIG. 5

EP 0 351 280 A1

FIG. 6

FIG. 7

FIG. 8

FIG. 9

FIG. 10

## FIG. 11

FIG. 12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 046 997 (ROCKWELL GOLDE GmbH) * Résumé; page 1, ligne 1 - page 2, ligne 80; revendication 1; figures * | 1 | B 60 J 7/057 E 05 F 15/14 |
| A | | 2-17 | |
| A | EP-A-0 149 940 (ACIERS ET OUTILLAGE PEUGEOT) * Résumé; page 1, ligne 17 - page 2, ligne 5; page 9, ligne 15 - page 11, ligne 12; revendication 1; figures * | 1-17 | |
| A | FR-A-2 378 307 (ETABLISSEMENTS CARPANO & PONS) * Page 1, ligne 11 - page 3, ligne 10; figures 4-7 * | 2-4,12, 15-17 | |
| A | US-A-2 421 084 (W.A. RAY) * Colonne 2, ligne 16 - colonne 3, ligne 27; colonne 4, lignes 27-42; figures 1,2 * | 1-4,12, 15-17 | |
| A | FR-A-1 305 422 (BOSCH GmbH) * Page 2, colonne de droite, paragraphe 3 - page 3, colonne de droite, revendication 1; figures * | 1-4,12, 15-17 | DOMAINES TECHNIQUES RECHERCHES (Int. Cl.4) B 60 J E 05 F G 05 B H 02 P |

**Le présent rapport a été établi pour toutes les revendications**

| Lieu de la recherche | Date d'achèvement de la recherche | Examinateur |
|---|---|---|
| LA HAYE | 21-08-1989 | ESTRELA Y CALPE J. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)